(19) Europäisches Patentamt

European Patent Office

Office européen des brevets

(11) **EP 0 902 556 B1**

(12) **EUROPEAN PATENT SPECIFICATION**

(45) Date of publication and mention
of the grant of the patent:
**16.03.2005 Bulletin 2005/11**

(51) Int Cl.⁷: **H04B 7/26**, H04B 7/10,
H04B 7/06

(21) Application number: **98116585.5**

(22) Date of filing: **02.09.1998**

(54) **Telecommunication system and method using radio link**

Telekommunikationsanordnung und Verfahren mit Funkverbindungen

Système et méthode de télécommunication utilisant des liaisons radio

(84) Designated Contracting States:
**DE FR GB**

(30) Priority: **10.09.1997 IT MI972060**

(43) Date of publication of application:
**17.03.1999 Bulletin 1999/11**

(73) Proprietor: **SIAE Microelettronica S.p.A.**
**20124 Milano (IT)**

(72) Inventor: **Rossi, Leonardo**
**29100 Piacenza (IT)**

(74) Representative: **Gatti, Enrico, Dr. Ing.**
**Ing. A. Gianbrocono & C. S.r.l.,**
**Via E. Zambianchi, 3**
**24121 Bergamo (IT)**

(56) References cited:
EP-A- 0 656 697          DE-A- 3 713 086
DE-A- 19 548 941        GB-A- 2 310 109
US-A- 4 083 009          US-A- 4 723 321

**Description**

The current invention concerns a telecommunication system and a method using radio link.

It is specifically implemented on a radio link without needing to reuse frequency and is particularly advantageous for medium and high capacity equipment (480 telephone channels and over) owing to their intrinsic major difficulty.

In telecommunication systems using radio link, that is having a transmitter with a transmitting antenna and a receiver with at least one receiving antenna, the signal outputting at the receiving antenna can be considered as consisting of a plurality of signals which have been attenuated and delayed while en route. The delays which the signals have undergone are due to the different signal path lengths between the transmission antenna and the reception antenna and the attenuations are basically due to propagation variation (fading) encountered on said paths.

It's known that the combination of said signals on the reception antenna causes the signal at the antenna output to have a variable amplitude and amplitude/phase distortion depending on the constructive or not constructive combination of the received signals. The signal at the output of the reception antenna can, in some cases, have a signal-to-noise (S/N) ratio and/or a distortion as seem temporarily degraded to such an extent as not to be able to recover the data it contains; in this manner the radio relay link will be temporarily out of service. The modulated information signals and received on the antenna will be synonymous with primary.

The use of the space and/or frequency diversity technique is known to reduce radio link out-of-service period and to permit receiving signals with amplitude and distortion such as to enable data recovery.

By frequency diversity it is meant the use of an alternative frequency rather far from the operative one which will be temporarily utilised during the out-of-service of the primary frequency channel. This technique typically requires a control and a switching system between the data obtained through demodulation of the two primary signals. By space diversity it is meant the regular use of two reception antennas spaced in such a way that the two received primary signals are sufficiently decorrelated so that if one is degraded the other antenna is likely to receive a signal with adequate quality. At this point, to make up for degrade use is made of a proper switching circuit placed between the demodulated signals, known as base band signals, which will utilise the best one; alternatively, the signals outputting the two antennas are properly combined so as to have only one signal with adequate quality. A combiner of such type sums the received primary signals after proper amplification and correction of their relative phase.

Normally, by diversification it is meant to have two signals that do not contemporarily undergo time-variation distortion (fading) phenomena. This is obtained through space and/or frequency diversity: the amount of spacing between the antennas and/or frequencies determines the degree of decorrelation permitting to reduce the possibility of common degrade. For example, as regards to a 6 GHz microwave band over which a 60 km long link will be realised in extreme climatic conditions (Padana Valley, during the summer period and with no wind), it might be necessary to implement space diversity with two reception antennas: it is quite improbable that the antennas are distanced less than 6 meters.

It is also known to transmit two different data streams together on the same frequency channel (frequency reuse) but using the two orthogonal polarisation's of the antenna. For example, a first signal is transmitted through vertical polarisation and a second signal through horizontal polarisation. In this manner it is possible to transmit more signals for a band unit. The two signals are separately handled in reception, and use is made of circuits adapt to suppress resulting cross generated interference.

The patent application DE-A-195 48 941 discloses an adaptive polarization diversity system for radio link communication. The system includes a base station antenna for transmitting either a clockwise polarized transmission or a counterclockwise polarized transmission, the transmission including a training pilot signal. The system further includes at least one subscriber unit for receiving the transmission, the unit including a first subscriber unit antenna for receiving a clockwise polarized transmission, a second subscriber unit antenna for receiving a counter-clockwise polarized transmission, and a dual channel receiver for adaptively combining the clockwise polarized transmission with the counterclockwise polarized transmission in proportion to first and second weights, respectively, the dual channel receiver determining the first and second weights so as to substantially optimally receive the training pilot signal.

The patent US 4,083,009 discloses a microwave communication systems combining discrete state modulation with diversity transmission and reception. Signals are transmitted and received in both horizontal and vertical antenna polarisation using QPSK modulation techniques in the preferred embodiment. At the receiving terminal the received signal with the best quality as determined by predetermined receiver parameters is selected as the output data stream. Switching between received signals is accomplished using a hitless switch such that no data is lost when switching between received data streams.

The Applicant has found that utilising a polarisation diversity system, i.e., transmission of two identical signals, (same frequency, same phase and same modulating information) with different polarisation (polarisation diversity), the slight fading difference between the two received signals, even if both degraded but in a different manner (decorrelation), is sufficient enough for a base band combiner to deliver a combined signal from which will be possible to recover the information it contains for a greater period with respect to the normal condition, where only one signal with only one polarisation is transmitted, thereby reducing the global out of service period.

The Applicant has also found the possibility of associating the polarisation diversity technique and the space diversity technique hence further enhancing performance.

The Applicant has also found that the use of even two antennas on the transmit side, one per polarisation paths, further enhances performance.

The Applicant has also found that a base band combiner can reconstruct a good quality signal from the combination of several signals even if individually are highly distorted but sufficiently diversified with respect to amplitude and phase values.

The first aspect of this invention concerns a telecommunication system according to claim 1.

The second aspect of this invention concerns a telecommunication method according to claim 10.

Further characteristics and aspects of this invention have been reported in the depending claims.

The implementation of the polarisation diversity allows to reduce out-of-service period for a radio link compared with the case of a signal transmitted on a single polarisation.

Specifically, the association of the polarisation diversity technique with the space diversity technique further improves radio link system performance. Performance is further enhanced thanks to the use of two spaced transmitting antennas, one for horizontal polarisation transmission and one for vertical polarisation transmission.

A 4-path diversity system is available but with only two antennas for the transmission side and for the reception side.

The efficiency of base band combination, i.e., of the demodulated signals, allows to implement a diversity reception with the infrastructure cost of only one antenna.

An advantage derived from these solutions is that of greatly reducing the noise threshold limit requested to satisfy the requisites of a critical hop: this also allows to reduce the antenna's diameters, particularly expensive when exceeding 3 meters.

It also enables to satisfy the performance requisites even without the need of frequency diversity: this detail might be particularly important for those users who want or can lease only one RF channel.

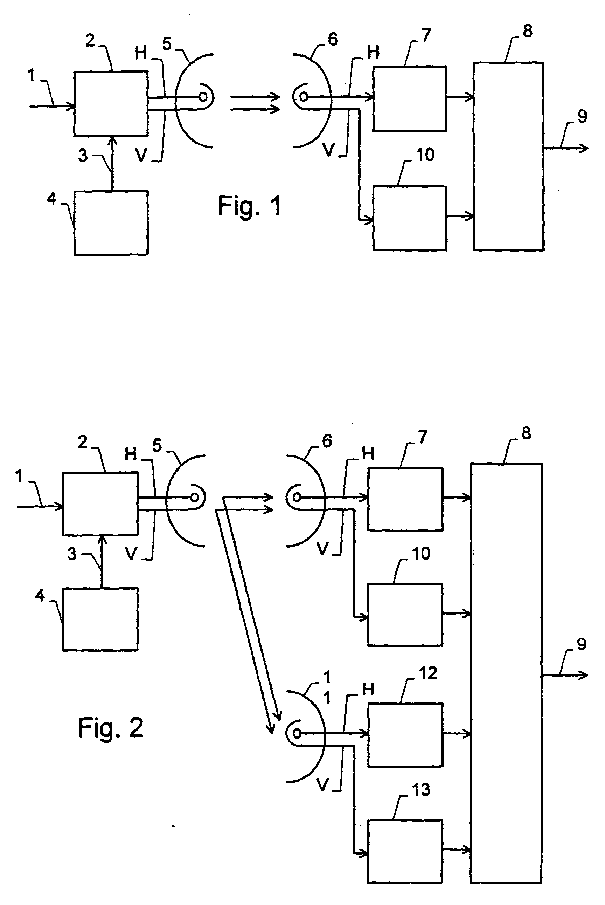

Polarisation diversity with only one antenna (fig. 1) can resolve the performance of medium difficulty hops which at times are realised with space diversity technique thereby reducing infrastructure costs.

The invention will be now illustrated in greater detail with the aid of the enclosed drawings where:

figure 1 illustrates a telecommunication system according to a first embodiment,

figure 2 illustrates a telecommunication system according to a second embodiment,

figure 3 illustrates a telecommunication system according to a third embodiment,

figure 4 illustrates a block diagram concerning the demodulation of two signals and of the base band combiner.

Where possible, use has been made of the same reference numbers given to the same elements on all the figures.

With reference to figure 1 the signal bearing the data to transmit is sent to input 1 of transmitter 2.

Transmitter 2 comprises the circuits needed to convert the data into a signal to be transmitted.

The system, does in no way bind the data encoding system, which with respect to the subject is an outmost process, likewise it does not limit the type of modulation used. The stated examples refer to a multilevel in quadrature amplitude modulation (MQAM)

A local oscillator 4 produces a frequency corresponding to the bearer of the signal to transmit and is forwarded to transmitter 2 through connection 3.

Transmitter 2 is also provided with means enabling to convey the ready to transmit signal to an antenna 5.

Specifically, the transmitter 2 conveys two identical signals (carrier with same frequency and phase, and same modulating information) to antenna 5, for instance by splitting the signal over two paths through a passive divider, not shown.

Antenna 5 can transmit the two received signals with two different polarisations, for example an horizontal one H and a vertical one V.

A receiving antenna 6 receives the signals with two different polarisations H and V and routes them over two distinct paths.

In particular, signal with polarisation H is sent to a receiver 7 and the signal with polarisation V is sent to a receiver 10 which shares with 7, not shown, the conversion oscillator at microwave or at intermediate frequency level or, eventually, at direct base band demodulation.

Receivers 7 and 10 each supply a signal to a base band combiner 8 which produces at output 9 a base band signal.

Receivers 7 and 10 include the circuits necessary to provide the combiner 8 with a base band signal.

The system described herewith concerns a polarisation diversity telecommunication system.

The same identical signal, i.e., with the same carrier frequency and same modulating information is transmitted with two different polarisations, and in reception the two signals are combined through a base band combiner 8.

In this manner if, owing to propagation phenomena, both signals result to be degraded, the combination of the two polarisation diversity signals will, most probably, restitute the transmitted information in an intelligible manner, hence recover the information.

The Bit Error Ratio (BER) and digital radio link signature concepts concurring to defining intelligibility are well-known to the skilled persons: intelligibility exists when the signal-to-noise ratio (S/N) is better than a certain threshold value typical for the modulation used to which is associated an error ratio related to the degrade conditions. In said digital radio equipment with a wide emitted spectrum, degrade is reached not only because having reached thermal noise threshold, but also because the distortion rate of the signal spectrum is such as to deform it until impairing the innermost area enclosed by the signature. It is known that propagation randomly effects both causes of degrade.

The base band combiner 8 can reconstruct a good signal from the combination of two signals even if highly distorted but with low correlation.

The system of figure 2, besides illustrating the blocks already described in the above figure 1, reports a second receiving antenna 11 situated at a predetermined distance from antenna 6 so as to have a polarisation diversity and space diversity combining system.

The receiving antenna 11 receives the signals with two different polarizations H and V, and routes onto two distinct paths.

In particular, the signal with polarisation H is sent to a receiver 12 and the signal with polarisation V is sent to a receiver 13.

Receivers 12 and 13 each deliver a signal to the base band combiner 8, which outputs 9 a base band signal.

The base band combiner 8 in this case combines 4 signals, one with horizontal polarisation H and one with vertical polarisation V, incoming from an antenna 6 and one with horizontal polarisation H and one with vertical polarisation V, incoming from another antenna 11 situated at a set distance from the first one.

The two antennas 6 and 11 each receive two signals incoming from two different paths, therefore, it is assumed that they have different distortions and/or attenuations (fading).

The probability of obtaining a signal with quality sufficient enough to recover information is, in this case, greater than that of the system illustrated in figure 1.

The minimum improvement entity can be evaluated with the usual enhancement assessing criteria given by space diversity. Minimum has been stated in that these criteria usually evaluate the probability that at least one of the two space diversity paths has not degraded, while the base band combiner permits to exceed this limit.

For example, when specifying the performance of the base band combiner account must be taken of the fact that it improves the thermal threshold of the combined signal with respect to the single signal by about 2.5 dB; or, with regard to distortion sensitivity defined by signature, it supplies a combined signal whose signature area corresponds, at a maximum, to a 1/8 of that of the single signal. This means that a degrade might occur if the spectral distortion of the two signals was inside the same eighth portion of the single signature.

The system described herein illustrates a polarisation diversity and space diversity telecommunication system.

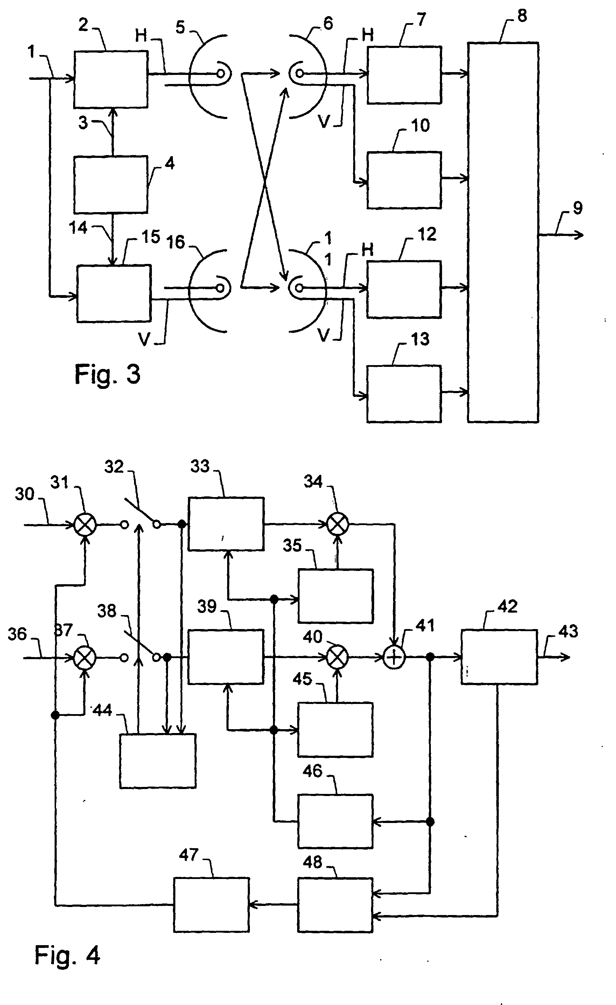

With reference to figure 3, the signal to transmit is forwarded to input 1 of a transmitter 2 and of a transmitter 15. A local oscillator 4 supplies a carrier frequency to transmitter 2 through a connection 3 and to transmitter 15 through a connection 14.

The transmitter 2 transfers the ready to transmit signal to the antenna 5. The antenna 5 transmits the signal according to a set polarisation, for example horizontal polarisation H.

The transmitter 15 transfers the ready to transmit signal to the antenna 16.

The antenna 16 transmits the signal according to a set polarisation, for example vertical polarisation V.

The receive section is similar to that already described and reported in figure 2.

The system described herein represents a polarisation diversity and a space diversity telecommunication system featuring two properly spaced transmitting antennas each transmitting a different polarisation signal. The presence of a second antenna 16 does not increase the cost of this system with respect to that of the system indicated in figure 2, in that it is already present because the link is of the bi-directional type, hence the transmission site and the reception site are alike even if not specified.

Antennas 5 and 16 transmit the same identical signal but with two different polarisations.

The two receiving antennas 6 and 11 each receive two different versions of the same transmitted information, but one inputs from a vertical polarisation V and the other from an horizontal polarisation H. The two signals received from each antenna, input from the space-different antennas 5 and 16, and the different polarisations follow different paths; therefore, it is understood that said signals have been subjected to various attenuations and distortions (fading).

The signal is received in a space diversity configuration for each type of polarisation, thus diversifying the same signal over four paths subjected to distortions that are not reciprocally correlated.

In this manner the probability of obtaining a combined signal with quality sufficient enough to recover information is further increased.

Two transmitters 2 and 15 are utilised in transmission, in that it is assumed of using, besides the regular transmitter 2, transmitter 15 of a "1+0 hot stand-by", i.e., utilising the standby or redundant transmitter nonetheless present in a radio equipment. As an alternative only one transmitter can be used and the output signal split onto two paths through, for example, a passive divider.

Between receivers 7, 10, 12 and 13 there are some connections not shown in figures 1, 2 and 3, but they are utilised to deliver the same local oscillator signal for intermediate frequency conversion, to deliver the signal to demodulate each of the 4 signals, and to supply only one sample clock frequency for them.

With reference to figure 4, the block diagram comprises the end part of two receivers, concerning coherent demodulation, and a two-input base band combiner as that shown in figure 1; however, it is to be understood that the concepts stated in the following can also be extended to the case of four receivers and to four-input combiners as described in figures 2 and 3, by duplicating the blocks and the paths making up the addenda of adder block 41. These concepts can also be utilised on a greater number of receivers.

According to the MQAM modulations rules, the signals shown on the routes are to be considered as complex, just as the blocks processing them.

The radio frequency signals or the intermediate frequency signals, after having been processed and eventually converted into intermediate frequency by circuits not shown in figure 4, are connected to the input 30 of a complex multiplier 31, for the signal received with vertical polarisation V, and at input 36 of a complex multiplier 37, for the signal received with horizontal polarisation H.

The signal outputting multiplier 31 is sent to a sampling circuit 32 hence to a fractionally spaced adaptive equaliser 33. The signal outputting equaliser 33 is applied to a multiplier 34 and then to an adder 41. The output of the adder 41 is sent to a threshold decision circuit 42 which delivers the decoded data to an output 43.

The signal outputting multiplier 37 is sent to a sampling circuit 38 hence to a fractionally spaced adaptive equaliser 39. The signal outputting equaliser 39 is sent to a multiplier 40 and then to an adder 41. The output of the adder 41 is also connected to an input of a carrier recovery circuit 48. An auxiliary output of the threshold decision circuit 42, supplying a square error, as specified in the following, is connected to a second input of the carrier recovery block 48. The carrier recovery block output 48 is connected to a variable controlled oscillator 47. The output of oscillator 47 is connected to a second input of the multiplier 37, and to a second input of the multiplier 31. It is not shown that the complex multipliers comprises two identical devices, one of which receives the 90° fixed phase-shifted oscillator signal. Carrier recovery is utilised to coherently demodulate the received signal, i.e., phased to the transmission modulated carrier.

The output of the adder 41 is also connected to an input of the circular decision circuit 46, the output of which is sent to equalisers 33 and 39 thereby supplying them with the data required to refresh coefficients. The output of the circular decision circuit 46 is also sent to the blocks to calculate the multiplying coefficients 35 and 45, the outputs of which are respectively connected to multipliers 34 and 40.

The output of sampler 32 and the output of sampler 38 are also connected to the clock recovery block 44. The output of block 44 delivers the reference frequency to samplers 32 and 38.

Clock recovery is utilised to sample the synchronously received signal to the modulating transmission signal.

The clock recovered by the clock recovery block 44, belongs to the clock recovery family not supported by data: i.e., it utilises the samples of the signal received prior to being processed. Therefore, the process is provided with a clock that has already been recovered and locked thus avoiding the need of a phase recovery jointed to the intelligibility condition of the received information. The technique utilised in the clock recovery consists of the use of two symbol-time samples for each of the signals to handle and belongs to those already suggested by Gardner: in this case it is extended to several signals, each contributing to the calculation of the immediate refreshing of the reference instant $\tau_{k+1}$ with the stochastic gradient process.

[References: F.M. Gardner, "Demodulator Reference Recovery Techniques Suited for Digital Implementation", ESA Final Report Estec n. 6847/86/NL/D4 August 1988.

F.M. Gardner, "A BPSK/QPSK Timing-Error Detector For Sampled Receivers", IEEE Transaction on Comm. Vol. COM-34 pages 423-429 May 1986.]

$$\tau_{k+1} = \tau_k - stsz \cdot \left( X_{k+1_i} - X_{k\ i} \right) \cdot X_{k-1/2_i}$$

In the formula by k it is meant the time instant, by i the number of the signal (from 1 to the number of diversity signals) and by stsz (step-size) a compounding prefixed value of the immediate correction, for example $3*10^{-5}$, which is determined by the noise value reached by the control voltage at steady state condition. For each received signal, $x_k$ is used both in the real and imaginary part of the formula.

The immediate correction thus calculated is then integrated with a pole and a zero so as to have a voltage signal for controlling a voltage controlled oscillator supplying the reference frequency to sampling circuits 32 and 28. The integrator and the oscillator are inside the clock recovery block 44.

Equalisers 33 and 39 belong to the fractionally spaced equalisers (FSE), in that they output a signal that is also a result of the symbol-time processing of two samples for each symbol period. The fact that said equalisers are not critical towards clock recovery is intrinsic, i.e., they can approximately equalise regardless of the clock position.

To make it independent from the carrier phase a circular decision circuit has been realised of the type suggested by Godard, Benveniste et al., modified and described in the following. Basically, at steady state the decision circuit calculates an error, which will then be utilised to assess the coefficients of equalisers 33 and 39, that does not depend on the carrier phase, so that the two equalisers, 33 and 39, can, in any case, equalise.

[References: D.N. Godard, "Self Recovering Equalisation and Carrier Tracking in Two Dimensional Data Communication System", IEEE Transaction on Communication, vol COMM-33 Aug. 1985, p.753.

A. Benveniste, M. Goursat, "Blind Equalizers", IEEE Transaction on Communication, vol COMM-32, Aug. 1984, p.871.

A. Benveniste, M. Goursat, G. Ruget, "Robust Identification of a Nonminimum Phase System: Blind Adjustment of a Linear Equaliser in Data Communications", IEEE Transaction on Automatic Control Vol AC-25, June 1980, p.385]

The fractionally spaced equaliser is provided with complex coefficients coefj, described as:

$$coef_j = C_{11} + C_{22} + i* (C_{12} + C_{21})$$

in which are pointed out the real components ($C11$ and $C22$ ) and the imaginary components ($C12$ and $C21$ ) and j stands to indicate the generic position inside the equaliser.

In this process architecture, one of the equalisers is defined as main: in it, the real parts of the central coefficient are set to =1; the imaginary part $C21$ is set to =0, while $C12$ refresh is left free. In the remaining diversity equalisers the real parts of its central coefficients is set = 1, while both the imaginary parts are being refreshing.

The structure of the equalisers 33 and 39 are not described herein in that it is well-known to the skilled person. It concerns a complex Finite Impulse Response (FIR) structure, with two outputs that can be described as real and imaginary parts $p_k+iq_k$:

$$p_k = \sum_{n=-N1}^{N2} C_{11} \cdot real\left(X_{k-n}\right) + \sum_{n=-N1}^{N2} C_{21} \cdot imag\left(X_{k-n}\right)$$

$$q_k = \sum_{n=-N1}^{N2} C_{22} \cdot imag\left(X_{k-n}\right) + \sum_{n=-N1}^{N2} C_{12} \cdot real\left(X_{k-n}\right)$$

where N1 and N2 are the precursor and postcursor coefficient numbers of FIR, while $X_k$ is the sample at instant k of the received and modulated signal.

Additionally, the coefficients of the fractionally spaced FIR, known to be unstable, are held in a stable configuration through the addition, during refreshing, of a shaped noise utilising for this purpose the modified Uyematsu-Sakaniwa technique.

[Reference: A. Spalvieri, C. Luschi, R. Sala, F. Guglielmi, "Stabilising the Fractionally Spaced Equaliser by Prewhitening", Proc. Globecom Nov. '95, IEEE, pp. 93-97].

The value of the stabilising shaped noise is termed leakage or, in short, leak.

The following refresh expressions of the coefficients e.g., for block 33 are stated herewith:

$$C^{k+1}{}_{11n} = C^{k}{}_{11.} - stsz \cdot \left( real\left(erc^{k}\right) \cdot M1_{11} \cdot real\left(X^{k-n}\right) + \mu \cdot leak \right)$$

$$C^{k+1}{}_{12n} = C^{k}{}_{12.} - stsz \cdot \left( imag\left(erc^{k}\right) \cdot M1_{22} \cdot real\left(X^{k-n}\right) + \mu \cdot leak \right)$$

$$C^{k+1}{}_{21n} = C^{k}{}_{21.} - stsz \cdot \left( real\left(erc^{k}\right) \cdot M1_{11} \cdot imag\left(X^{k-n}\right) + \mu \cdot leak \right)$$

$$C^{k+1}{}_{22n} = C^{k}{}_{22.} - stsz \cdot \left( imag\left(erc^{k}\right) \cdot M1_{22} \cdot imag\left(X^{k-n}\right) + \mu \cdot leak \right)$$

where n is the position of a generic coefficient (0 stands for centre); m is a fixed compounding coefficient of the stabilising noise (e.g., 0.25), stsz is the compounding coefficient of the instantaneous entity of correction (e.g., for the sake of convenience it must not exceed $6*10^{-5}$ for 128QAM modulation); k is the sampling instant. The circular error erc is described below.

The outputs of blocks 35 and 45 provide coefficients M1 and M2 to multipliers 34 and 40. These coefficients are real (only 11 and 22) and vary the amplitude of each signal before being combined in sum node 41. The phase rotation between the signals is executed by the previous equalisers 33 and 39.

For example, the calculation of M1 and its refreshing takes place in block 35 as follow:

$$M1^{k+1}{}_{11} = M1^{k}{}_{11} - stsz \cdot \left( real\left(erc^{k}\right) \cdot p_{1} \right)$$

$$M1^{k+1}{}_{22} = M1^{k}{}_{22} - stsz \cdot \left( imag\left(erc^{k}\right) \cdot q_{1} \right)$$

where p1 and q1 are the outputs of block 33 (real and imaginary parts)

The estimated datum is reconstructed by the threshold decision circuit 42: it individually assesses the error for the real part and for the imaginary part as output difference of the Adder circuit 41 with respect to the value nearest to the theoretical one (+/-1, +/-3, +/-5, ...etc.). This error is commonly defined as square and is the one supplied to the carrier recovery circuit 48: it generate the common reconstructed carried utilised by all the demodulators (to said blocks 31 and 37 and eventually to others in case of 4-paths). As it can be seen, the carrier recovery ring is internally comprised of adaptive equalisers and is conceivable by the fact that the equaliser/combiner block does not interfere with the phase of the demodulated signal: the two functions, even if linked, do not interact.

At this point let's consider a set of circumferences passing through the theoretical points of the constellation: they form a grid which is used by the circular decision circuit 46. The decision technique is as that specified above and is suitably modified so as to have one unique decision technique based both on the acquisition instants after loss of synchronism, caused by particularly severe fading conditions and defined as blind acquisitions since this phase does not contain the intelligible information, and in regular steady state conditions i.e., without swapping parts of the technique between the two cases. Specifically, being u the vector with real and imaginary components at the output of adder 41, and being d the radius of circumference of the set of value nearest to u, then the circular error is given by:

$$real\ (erc) = \frac{u - d}{u} \cdot real(u)$$

$$imag(erc) = \frac{u - d}{u} \cdot imag(u)$$

and it approximates zero upon reaching acquisition and with no noise and/or distortion, when u coincides with d. Conversely, the above references utilise for acquisition a df fixed value circumference, which approximately corresponds to the barycenter of the constellation, to calculate the circular error for coefficient refreshing: when acquisition has been

EP 0 902 556 B1

gained, the distance u - df remains statistically high, needing to switch to another type of calculation. As regards to the system subject of this invention, the use of the calculated error, referring to such fixed circumference, is only for sign-comparison with the circular one: if for instant k the signs do not agree, then coefficient refreshing is deferred.

The calculation of the coefficients for the fractionally spaced equalisers 33 and 39 and of the coefficients of the combiner assessed by blocks 35 and 45, as specified, tends to minimise the circular squared error: being the correction compressed by stsz, steady state values are gradually reached, therefore the technique applies the stochastic gradient concept. In this manner, the processing set consisting of equalisers and of the combining system is not based on the phase accuracy of the carrier used to demodulate all the diversity signals.

The basic points of the combiner is the sole synchronism clock recovery, which is utilised to sample the received signals for digital processing, and the sole carrier recovery for the group of demodulators.

This prevents a critical realignment system for the signal samples hence permitting to later handle them in the common combining process.

It also avoids difficult joint recovery of several carriers, which would slow down and make difficult the so-called blind recovery hence making the global recovery difficult, i.e., after a loss of synchronism due to a decrease in the received field strength. In fact the propagation phenomena which must be prevented is of the fast time and has a short duration, around a few seconds till some tenths: a delay in recovery could further increase out-of-service periodicity due to temporary extreme natural phenomena. In fact, the international recommendations allow a maximum out-of-service of a few seconds in the worst month, so that a long recovery hystheresis could greatly affect the objectives.

The incoming signals are the signals that have been demodulated through the unique reconstructed carrier.

The fact that the same signal is also present as a crossed interference is, according to the current invention, irrelevant: the base band combiner globally optimises, as compared to the previous generation systems which combines the primary signals at the intermediate frequency (IF), in that it is not provided with error monitoring on the decision circuit, sole exact measurement point for signal status.

Based on the above description and on the enclosed drawings, an experienced technician will have no difficulty in realising the circuits utilised for this invention hence circuit structure will not be detailed.

Even though the invention has been described taking as reference the specific embodiment, however note that it is not limited to the embodiment described and illustrated being subjected to many variations presented to the expertise and that must be considered as being part of the protection bounds by the enclosed claims.

**Claims**

1. The telecommunication system implementing radio equipment comprises:

   transmission means (2, 15) producing a first and a second communication signal with the same transmission frequency and modulated with one same modulation signal,
   at least one transmitting antenna (5,16) transmitting said first communication signal with a first polarisation (H) and said second communication signal with a second polarisation (V) differing from said first polarisation (H),
   at least two receiving antenna (6, 11) receiving said first communication signal with a first polarisation (H) and said second communication signal with a second polarisation (V),
   reception means (7, 10, 12, 13) receiving said first communication signal with a first polarisation (H) and said second communication signal with a second polarisation (V), and producing a first received signal and a second received signal,
   combining means (8) combining said first received signal and said second received signal in base band; **characterized in that**
   said base band combining means (8) include a circular decision circuit (46) supplying a circular error, and a fractionally spaced equaliser (33, 39) for each received signal, receiving a sampled signal and having a plurality of coefficients, said circular error is used to calculate said plurality of coefficients.

2. Telecommunication system according to claim 1 **characterized by** the fact that said base band combining means (8) comprise a sampling device (32, 38) for each received signal and driven by only one clock supplied by a clock recovery circuit (44).

3. Telecommunication system according to claim 2 **characterized by** the fact that said sampling device (32,38) uses a calculation method for the sampling time to which all the received signals contribute.

4. Telecommunication system according to claim 1 **characterized by** the fact that said base band combining means (8) include one demodulator (31, 37) for each received signal driven by only one frequency supplied by a variable controlled oscillator (47).

5. Telecommunication system according to claim 1 **characterized by** the fact that the base band combining means (8) comprise said circular decision circuit (46) receiving at the input said combined signals and delivers said circular error and a multiplier of a coefficient multiplicative, for each signal being received, said circular error is used to calculate said multiplicative coefficient.

6. Telecommunication system according to claim 1 **characterized in that**

said combining means (8) comprises a first multiplier (31) and a second multiplier (37) receiving respectively said first received signal and said second received signal;

a first sampling circuit (32) and a second sampling circuit (38) coupled respectively to said first multiplier (31) and to said second multiplier (37);

a first equaliser (33) and a second equaliser (39) coupled respectively to said first sampling circuit (32) and to said second sampling circuit (38);

a first multiplier (34) and a second multiplier (40) coupled to said first equaliser (33) and to said second equaliser (39);

an adder (41) connected to said first multiplier (34) and to said second multiplier (40);

a threshold decision circuit (42) connected to said adder (41).

7. Telecommunication system according to claim 6 **characterized by** further comprising

a first block (35) and a second block (45) that calculate the multiplying coefficients, the outputs of which are respectively connected to said first multiplier (34) and to said second multiplier (40);

a circular decision circuit (46) coupled to said adder (41) and supplying a signal to said first equaliser (33), to said second equaliser

(39), to said first block (35) and to said second block (45).

8. Telecommunication system according to claim 6 **characterized by** further comprising

a carrier recovery circuit (48) receiving a signal from said threshold decision circuit (42) and from said adder (41) and coupled to a variable controlled oscillator (47), the output of said variable controlled oscillator (47) is connected to said first multiplier (31) and to said second multiplier (37).

9. Telecommunication system according to claim 6 **characterized in that** said first sampling circuit (32) and to said second sampling circuit (38) are driven by only one clock provided by the clock recovery block (44).

10. Telecommunication method through radio link comprising the following phases:

transmitting a first communication signal having a first polarisation,
transmitting a second communication signal having a second polarisation, said second signal is identical to said first signal,
receiving said first communication signal having a first polarisation,
receiving said second communication signal having a second polarisation
demodulating said first communication signal,
demodulating said second communication signal,
combining said first demodulated signal and said second demodulated signal at base band,

**characterized in that**
said phase of combining said first demodulated signal and said second demodulated signal comprises the phase of calculating a circular error used for the calculation of a plurality of coefficients of a fractionally spaced equaliser (33, 39).

11. Telecommunication method according to claim 10 **characterized by** the fact that said phase of combining said first demodulated signal and said second demodulated signal comprises the phase of sampling the received signals with only one sampling time for both the received signals.

12. Telecommunication method according to claim 10 **characterized in that** said phase of combining said first demodulated signal and said second demodulated signals comprises the carrier frequency recovery phase through only one oscillator (47) for both the received signals.

**Patentansprüche**

1.  Telekommunikationssystem, das Funkvorrichtungen einsetzt, mit:

    Übertragungseinrichtungen (2, 15), die ein erstes und ein zweites Kommunikationssignal erzeugen, die die gleiche Übertragungsfrequenz haben und mit demselben Modulationssignal moduliert sind,

    wenigstens einer Übertragungsantenne (5, 16), die das erste Kommunikationssignal mit einer ersten Polarisation (H) sendet und das zweite Kommunikationssignal mit einer zweiten Polarisation (V) sendet, die sich von der ersten Polarisation (H) unterscheidet,

    wenigstens zwei empfangenden Antennen (6, 11), die das erste Kommunikationssignal mit einer ersten Polarisation (H) und das zweite Kommunikationssignal mit einer zweiten Polarisation (V) empfangen,

    Empfangseinrichtungen (7, 10, 12, 13), die das erste Kommunikationssignal mit einer ersten Polarisation (H) und das zweite Kommunikationssignal mit einer zweiten Polarisation (V) empfangen und ein erstes empfangenes Signal und ein zweites empfangenes Signal erzeugen,

    Kombiniereinrichtungen (8), die das erste empfangene Signal und das zweite empfangene Signal im Basisband kombinieren, **dadurch gekennzeichnet, dass**

    die Basisbandkombiniereinrichtungen (8) eine zirkulare Entscheidungsschaltung (46), die einen zirkularen Fehler liefert, und einen *fractionally spaced equalizer* (33, 39) für jedes empfangene Signal umfassen, der ein abgetastetes Signal empfängt und eine Mehrzahl von Koeffizienten hat, wobei der zirkuläre Fehler dazu verwendet wird, um die Mehrzahl von Koeffizienten zu berechnen.

2.  Telekommunikationssystem nach Anspruch 1, **gekennzeichnet durch** die Tatsache, dass die Basisbandkombiniereinrichtungen (8) eine Abtasteinrichtung (32, 38) für jedes empfangene Signal und betrieben **durch** nur einen Takt aufweisen, der von einer Taktrückgewinnungsschaltung (44) geliefert wird.

3.  Telekommunkationssystem nach Anspruch 2, **gekennzeichnet durch** die Tatsache, dass die Abtasteinrichtung (32, 38) ein Berechnungsverfahren für die Abtastzeit verwendet, zu dem alle empfangenen Signale beitragen.

4.  Telekommmunikationssystem nach Anspruch 1, **gekennzeichnet durch** die Tatsache, dass die Basisbandkombiniereinrichtungen (8) einen Demodulator (31, 37) für jedes empfangene Signal aufweisen, die nur mit einer Frequenz betrieben werden, welche **durch** einen variabel gesteuerten Oszillator (47) geliefert wird.

5.  Telekommunikationssystem nach Anspruch 1, **gekennzeichnet durch** die Tatsache, dass die Basisbandkombiniereinrichtungen (8) die zirkulare Entscheidungsschaltung (46), die am Eingang die kombinierten Signale empfängt und den zirkularen Fehler liefert, und einen Multiplizierer für einen multiplikativen Koeffizienten, für jedes empfangene Signal, aufweist, wobei der zirkulare Fehler dazu verwendet wird, um den multiplikativen Koeffizienten zu berechnen.

6.  Telekommunikationssystem nach Anspruch 1, **dadurch gekennzeichnet, dass**
    die Kombiniereinrichtung (8) einen ersten Multiplizierer (31) bzw. einen zweiten Multiplizierer (37) aufweist, der das erste empfangene Signal bzw. das zweite empfangene Signal empfängt,
    eine erste Abtastschaltung (32) bzw. eine zweite Abtastschaltung (38) mit dem ersten Multiplizierer (31) bzw. mit dem zweiten Multiplizierer (37) gekoppelt ist,
    ein erster Equalizer (33) bzw. ein zweiter Equalizer (39) mit der ersten Abtastschaltung (32) bzw. mit der zweiten Abtastschaltung (38) gekoppelt ist,
    ein erster Multiplizierer (34) und ein zweiter Multiplizierer (40) mit dem ersten Equalizer (33) und dem zweiten Equalizer (39) gekoppelt sind,
    ein Addierer (41) mit dem ersten Multiplizierer (34) und mit dem zweiten Multiplizierer (40) verbunden ist,
    eine Schwellenwertentscheidungsschaltung (42) mit dem Addierer (41) verbunden ist.

7.  Telekommunikationssystem nach Anspruch 6, **dadurch gekennzeichnet, dass** es weiter aufweist:

    einen ersten Block (35) bzw. einen zweiten Block (45), der multiplizierende Koeffizienten berechnet und dessen Ausgang mit dem ersten Multiplizierer (34) bzw. mit dem zweiten Multiplizierer (40) verbunden ist,

eine zirkulare Entscheidungsschaltung (46), die mit dem Addierer (41) verbunden ist und dem ersten Equalizer (33), dem zweiten Equalizer (39), dem ersten Block (35) und dem zweiten Block (45) ein Signal liefert.

8. Telekommunikationssystem nach Anspruch 6, **dadurch gekennzeichnet, dass** es weiter aufweist:

eine Trägerrückgewinnungsschaltung (48), die ein Signal von der Schwellenwertentscheidungsschaltung (42) und von dem Addierer (41) empfängt und mit dem variabel gesteuerten Oszillator gekoppelt ist, wobei der Ausgang des variabel gesteuerten Oszillators (47) mit dem ersten Mulitplizierer (31) und dem zweiten Multiplizierer (37) verbunden ist.

9. Telekommunikationssystem nach Anspruch 6, **dadurch gekennzeichnet, dass** die erste Abtastschaltung (32) und die zweite Abtastschaltung (38) mit nur einem Takt betrieben werden, der von dem Taktrückgewinnungsblock (44) bereitgestellt wird.

10. Telekommunikationsverfahren durch eine Funkverbindung, das die folgenden Phasen umfasst:

Übertragen eines ersten Kommunikationssignals mit einer ersten Polarisation,

Übertragen eines zweiten Komrnunikationssignals mit einer zweiten Polarisation, wobei das zweite Signal identisch mit dem ersten Signal ist,

Empfangen des ersten Kommunikationssignals mit der ersten Polarisation,

Empfangen des zweiten Kommunikationssignals mit der zweiten Polarisation,

Demodulieren des ersten Kommunikationssignals,

Demodulieren des zweiten Kommunikationssignals,

Kombinieren des ersten demodulierten Signals mit dem zweiten demodulierten Signal in einem Basisband,

**dadurch gekennzeichnet, dass**
die Phase des Kombinierens des ersten demodulierten Signals mit dem zweiten demodulierten Signal die Phase der Berechnung eines zirkularen Fehlers umfasst, der für die Berechnung einer Mehrzahl von Koeffizienten eines fractio*nally spaced equalizers* (33, 39) verwendet wird.

11. Telekommunikationsverfahren nach Anspruch 10, **gekennzeichnet durch** die Tatsache, dass die Phase des Kombinierens des ersten demodulierten Signals mit dem zweiten demodulierten Signal die Phase des Abtastens der empfangenen Signale mit nur einer Abtastzeit für beide empfangenen Signale umfasst.

12. Telekommunikationsverfahren nach Anspruch 10, **dadurch gekennzeichnet, dass** die Phase des Kombinierens des ersten demodulierten Signals mit dem zweiten demodulierten Signal die Phase der Rückgewinnung der Trägerfrequenz durch nur einen Oszillator (47) für beide empfangene Signale umfasst.

**Revendications**

1. Système de télécommunication implémentant un équipement radio comprenant :

des moyens de transmission (2, 15) produisant un premier et un second signaux de communication avec la même fréquence de transmission et modulés avec le même signal de modulation,
au moins une antenne de transmission (5, 16) transmettant ledit premier signal de communication avec une première polarisation (H) et ledit second signal de communication avec une seconde polarisation (V), différente de ladite première polarisation (H),
au moins deux antennes de réception (6, 11) recevant ledit premier signal de communication avec une première polarisation (H) et ledit second signal de communication avec une seconde polarisation (V),

des moyens de réception (7, 10, 12, 13) recevant ledit premier signal de communication avec une première polarisation (H) et ledit second signal de communication avec une seconde polarisation (V), et produisant un premier signal reçu et un second signal reçu,

un moyen de combinaison (8) combinant ledit premier signal reçu et ledit second signal reçu en bande de base ; **caractérisé en ce que**

ledit moyen de combinaison en bande de base (8) comprend un circuit de décision circulaire (46) délivrant une erreur circulaire et un égaliseur (33, 39) à espacement fractionnaire pour chaque signal reçu, recevant un signal échantillonné et ayant une pluralité de coefficients, ladite erreur circulaire étant utilisée pour calculer ladite pluralité de coefficients.

2. Système de télécommunication selon la revendication 1, **caractérisé par le fait que** ledit moyen de combinaison en bande de base (8) comprend un dispositif d'échantillonnage (32, 38) pour chaque signal reçu et qu'il est commandé par uniquement un signal d'horloge délivré par un circuit de récupération de signal d'horloge (44).

3. Système de télécommunication selon la revendication 2, **caractérisé par le fait que** ledit dispositif d'échantillonnage (32, 38) utilise un procédé de calcul pour le temps d'échantillonnage auquel tous les signaux reçus contribuent.

4. Système de télécommunication selon la revendication 1, **caractérisé par le fait que** ledit moyen de combinaison en bande de base (8) comprend un démodulateur (31, 37) pour chaque signal reçu commandé par uniquement une fréquence délivrée par un oscillateur contrôlé variable (47).

5. Système de télécommunication selon la revendication 1, **caractérisé par le fait que** le moyen de combinaison en bande de base (8) comprend ledit circuit de décision circulaire (46) recevant en entrée lesdits signaux combinés et délivrant ladite erreur circulaire et un multiplicateur d'un coefficient multiplicatif pour chaque signal étant reçu, ladite erreur circulaire étant utilisée pour calculer ledit coefficient multiplicatif.

6. Système de télécommunication selon la revendication 1, **caractérisé en ce que** :

ledit moyen de combinaison (8) comprend un premier multiplicateur (31) et un second multiplicateur (37) recevant respectivement ledit premier signal reçu et ledit second signal reçu ;
un premier circuit d'échantillonnage (32) et un second circuit d'échantillonnage (38) respectivement couplés au dit premier multiplicateur (31) et au dit second multiplicateur (37) ;
un premier égaliseur (33) et un second égaliseur (39) respectivement couplés au dit premier circuit d'échantillonnage (32) et au dit second circuit d'échantillonnage (38) ;
un premier multiplicateur (34) et un second multiplicateur (40) couplés au dit premier égaliseur (33) et au dit second égaliseur (39) ;
un additionneur (41) connecté au dit premier multiplicateur (34) et au dit second multiplicateur (40) ;
un circuit de décision de seuil (42) connecté au dit additionneur (41).

7. Système de télécommunication selon la revendication 6, **caractérisé en ce qu'**il comprend en outre :

un premier bloc (35) et un second bloc (45) qui calculent les coefficients de multiplication, les sorties desquels sont respectivement connectées au dit premier multiplicateur (34) et au dit second multiplicateur (40) ;
un circuit de décision circulaire (46) couplé au dit additionneur (41) et délivrant un signal au dit premier égaliseur (33), au dit second égaliseur (39), au dit premier bloc (35) et au dit second bloc (45).

8. Système de télécommunication selon la revendication 6, **caractérisé en ce qu'**il comprend en outre :

un circuit de récupération de porteuse (48) recevant un signal dudit circuit de décision de seuil (42) et dudit additionneur (41) et couplé à un oscillateur contrôlé variable (47), la sortie dudit oscillateur contrôlé variable (47) est connectée au dit premier multiplicateur (31) et au dit second multiplicateur (37).

9. Système de télécommunication selon la revendication 6, **caractérisé en ce que** ledit premier circuit d'échantillonnage (32) et ledit second circuit d'échantillonnage (38) sont commandés par uniquement un seul signal d'horloge délivré par le bloc de récupération de signal d'horloge (44).

10. Procédé de télécommunication par liaison radio comprenant les phases suivantes :

transmettre un premier signal de communication ayant une première polarisation,

transmettre un second signal de communication ayant une seconde polarisation, ledit second signal étant identique au dit premier signal,

recevoir ledit premier signal de communication ayant une première polarisation,

recevoir ledit second signal de communication ayant une seconde polarisation,

démoduler ledit premier signal de communication,

démoduler ledit second signal de communication,

combiner ledit premier signal démodulé et ledit second signal démodulé en bande de base,

**caractérisé en ce que** :

ladite phase consistant à combiner ledit premier signal démodulé et ledit second signal démodulé comprend la phase consistant à calculer une erreur circulaire utilisée pour le calcul d'une pluralité de coefficients d'un égaliseur à espacement fractionnaire (33, 39).

11. Procédé de télécommunication selon la revendication 10, **caractérisé par le fait que** ladite phase consistant à combiner ledit premier signal démodulé et ledit second signal démodulé comprend la phase consistant à échantillonner les signaux reçus avec uniquement un temps d'échantillonnage pour les deux signaux reçus.

12. Procédé de télécommunication selon la revendication 10, **caractérisé en ce que** la phase consistant à combiner ledit premier signal démodulé et ledit second signal démodulé comprend la phase de récupération de fréquence de porteuse via uniquement un oscillateur (47) pour les deux signaux reçus.

Fig. 1

Fig. 2

Fig. 3

Fig. 4